# EUROPEAN PATENT SPECIFICATION

(11) **EP 0 955 117 B1**
(45) Date of publication and mention of the grant of the patent: **11.07.2001**
(21) Application number: 99108261.1
(22) Date of filing: 28.04.1999
(51) Int. Cl.: B23B 5/12, B23B 27/16

(54) **Cutting insert for a peeling operation**
Schneideinsatz zum Schälen
Plaquette de coupe pour une opération d'écorçage

(30) Priority: 29.04.1998 SE 9801501
(43) Date of publication of application: 10.11.1999
(73) Proprietor: SANDVIK AKTIEBOLAG, 811 81 Sandviken (SE)
(72) Inventor: Isaksson, Robert, 810 28 Järbo (SE)
(74) Representative: Taquist, Lennart

(56) References cited:
- WO-A-96/09908
- US-A- 4 035 888

## Description

The present invention relates to a cutting insert for a bar peeling operation performed in stainless steel or other heat resistant materials wherein the insert has a polygonal form including an upper chip face, an opposite bottom face and a clearance face located therebetween, whereby the intersection of the chip face and the clearance face forms a cutting edge. A cutting insert comprising in combination all the features of the preamble of claim 1 is known from WO-A-96 09 908.

Bar peeling as a metalworking operation means that a bar is axially displaced through a rotary cutter head, the cutter head of which is provided with several distantly around the periphery arranged tools which remove from the bar a thin layer of millscale, surface cracks, etc., that results from the hot rolling of such bars or tubes. In order to achieve the best results regarding tolerances and surface finish, two different types of inserts are usually combined in the same holder. DE-3540665 discloses such tools equipped with a round roughing insert and a finishing insert usually having straight edges.
EP-A-131 784 discloses a bar peeling tool with an insert having angularly broken edges. Such inserts, however, have somewhat limited utility because they do not enable desired results to be achieved in terms of tolerances and surface finish.

In view thereof, it is a purpose of this invention to provide a new type of insert and a tool will satisfy close tolerance demands and enable very good surface finish to be achieved at the same time as the insert will enable thick and thin chips to be separated from each other in a better way which will enable obtaining a shorter chip length when large feeds are involved whilst reducing the risk of chip entanglement.

It is another purpose of the invention to provide an insert with an extended lifetime.

It is another purpose of the invention to provide an insert that becomes more economic due to the usage of only one type of insert.

It is yet another purpose of the invention to provide an insert which can more efficiently reduce and counter the tendency for vibrations to occur during a metal cutting operation.

The invention is defined in claim 1. A preferred embodiment is shown in the accompanying drawings.
Fig. 1 is a plan view of an insert for bar peeling of the invention;
Fig. 2 is a perspective view of an insert for bar peeling according to the embodiment of Fig. 1;
Fig. 3 is a plan view of a tool holder equipped with an insert according to the invention; and
Fig. 4 is a side view of the tool holder and the insert of the invention.

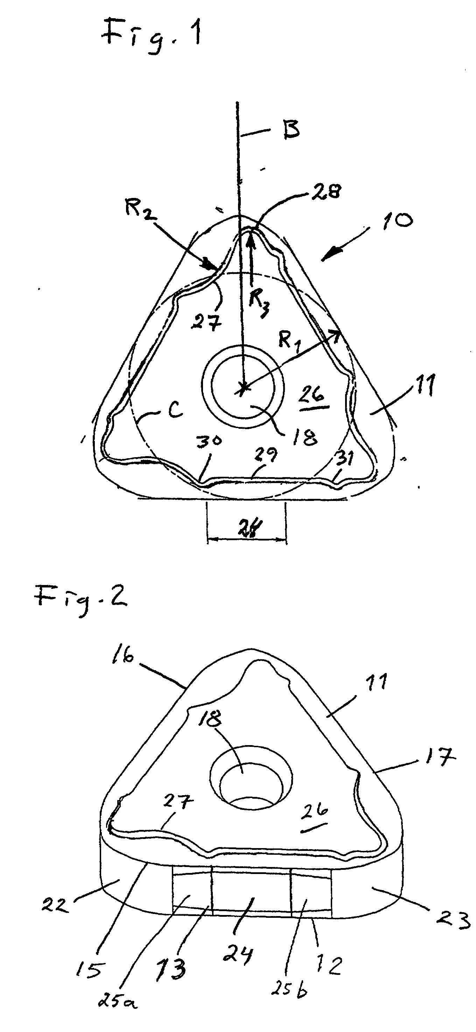

An insert according to the invention is shown in Fig. 1 which comprises a polygonal body 10 of wear resistant material which includes an upper chip face 11, an opposite bottom face 12 that is parallel with the chip face 11, and clearance edge surfaces located between the faces 11, 12, one edge surface 13 being visible in Fig. 2. The intersection lines between chip face 11 and said edge surfaces represent main cutting edges 15, 16, 17. The edge clearance faces are oriented substantially perpendicularly in relation to chip face 11 and bottom face 12. The insert body has a central aperture 18 which extends entirely through the insert body to receive a suitable clamping screw or lever arm of an associated tool holder 19.

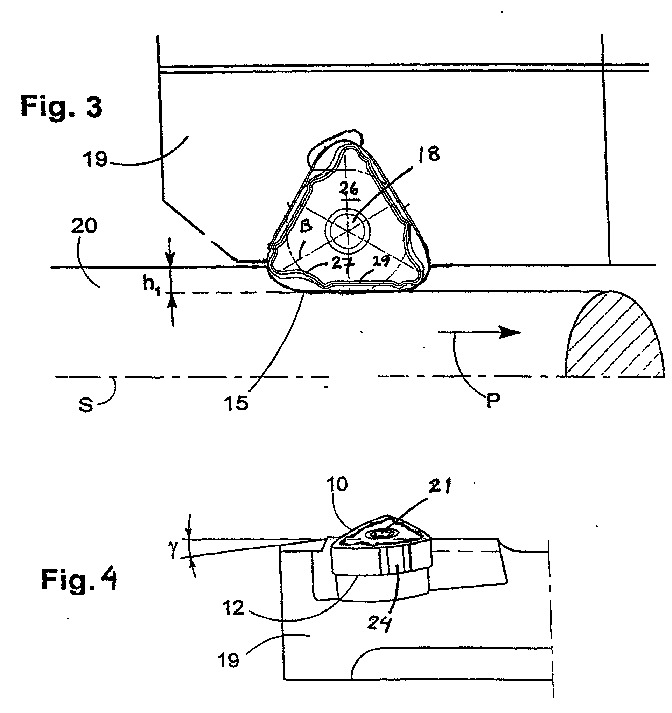

In accordance with the invention the insert has three edge surfaces which are convexly curved in the corner areas, said surfaces intersecting with the chip face 11 to provide convex cutting edges. With the tool holder 19 shown in Fig. 3 the active edge that is engaged with the workpiece 20 is designated 15. Although the insert body 10 in this embodiment is provided with a central aperture 18 for the receipt of a central locking screw 21 it is to be understood that such insert could alternatively be solid and clamped into its holder 19 by means of a clamp body that is urged against the chip face of such insert body 10. The curvature of the convex cutting edges 15, 16, 17 is such that the edges are tangentially provided in regard of an imaginary circle C with radius R₁ inscribed in said insert. The tool holder is intended to do active work whilst simultaneously feeding the workpiece 20 forward in direction of arrow P to achieve cutting depth h₁. As a result of simultaneous turning of said workpiece a chip is peeled off from said workpiece whereby the main cutting edge 15 is active during said working.

It is characteristic that the edge surface between two corners comprises two convexly curved edge surfaces 22, 23 with a unitary radius which are separated by a flat surface portion 24 with straight edges at the intersection between the upper surface 11 and the lower surface 12. This surface 24 is intended to be a bevelled phase or a wiper aimed to generate a smooth surface in the axial direction of the workpiece 20. The longitudinal extension of the flat surface portion could vary. The size of the flat surface will depend upon the depth h₁ at which it is desirable to perform metalworking. Between said surface 24 and said edge surfaces 22, 23 there is a shorter flat surface 25a, 25b inclined inwards towards the central portion of the insert at an angle of 0-2° from the direction of said flat surface 24. It is to be understood that the intersection line between each said intermediate flat surface 25a, 25b and the top surface 11 is effectively considered to be an extended portion of the main cutting edge 15, 16, 17.

In order to achieve a desirable type of chipbreaking at various cutting depths a chip former is provided on the chip face at a certain distance from the cutting edges. These chip formers are in the shape of chipbreaking walls sloping downwards from an elevated plateau 26 arranged plane parallel with top and bottom surfaces 11, 12, said walls being inclined at an acute angle. More specifically these wall portions are provided at the corner areas having a non-symmetrical configuration in relation to a bisector B passing through each corner. Hence, the inclined wall portion of the plateau 26 in such corner is composed of a concave portion 27 with a large radius of curvature R₂ located on one side of the bisector B, and an adjacent convexly curved portion 28 having a radius of curvature R₃ that is essentially similar than radius R₂, said radius R₃ also being smaller than the radius of the curved edge surfaces 22, 23. The bisector B should preferably extend through the inflexion point between the curved portions 27 and 28. Thanks to this arrangement there is provided a substantial space close to the cutting edge 15 (see Fig. 2) such that a more curved chip can be obtained due to the c-shaped configuration of said concave surface portion 27. A chip separation occurs due to the formation of the thick chip created at the corner whereas the thinner chip is obtained by a wiper-effect along the surface portion 24. The total length of chip could thereby be shortened. The plateau 26 is confined by straight portions 29, the length of which represents the sum of the length of portions 24 and 25b. These wall portions 29 extend parallel with flat surface portions 24. The longitudinal extension of wall portion 29 is confined by two radially therefrom extending convex surface portions 30, 31 each of which having a radius of curvature R₄ that is essentially smaller than the radius R₃ of the convexly curved portions 28.

On the opposite side of the insert, compared with plan view of Fig. 1, the plateau has the inverted appearance in relation to bisector B. This means that the portion of the insert at the comer exposed to the largest cutting forces is given improved bottom support since the surface area of the plateau at said comer will be located closer to the active cutting edge. The amount of overhang will be smaller at the most sensible comer area of the insert, which will contribute to better strength, less tendency to vibrations and extended lifetime of the insert.

Investigations carried out have shown that the relation of the length of the main cutting edge 15 and its associated edge, i.e. the sum of the edges provided by surface portions 22 and 25a respectively, should be 1.3-1.5 times the length of the planar surface portion 24.

In Fig. 4 there is illustrated how the insert 10 is obliquely oriented in its holder 19 to i achieve a suitable clearance angle during working. The insert 10 is arranged such that it is inclined in relation to a horizontal plane extending through axis S at an angle γ in the range 0-4°. At the same time the insert is tilted forwardly at the same angle γ, i.e. it is inclined in a direction that is perpendicular from said first tilting direction. Although the invention is illustrated and described in the shape of an insert with negative basic shape, i.e. a shape in which the edge surfaces are oriented at right angle from the upper chip face 11 and the lower face 12 it is to be understood that the invention is also applicable with positive inserts, i.e. a shape where edge surfaces intersect with the plane of the upper rake face 11 at an acute angle.

## Claims

1. A cutting insert for bar peeling comprising a multi-cornered polygonal body (10) of wear resistant material, said body including top and bottom surfaces (11, 12) and a peripheral edge surface (13) extending therebetween, said peripheral edge surface including comer faces (22, 23) disposed at respective corners of said body, said corner faces intersecting said top surface to form main cutting edges (15, 16, 17) each said cutting edge being convexly curved as said top surface is viewed in plan, said top surface defining a chip face, whereby the surface between two comers is separated by a flat surface portion (24) with straight intersection edges at the intersection line between said portion (24) and the top surface and at the intersection line between said portion (24) and the bottom surface (12), and said chip face being provided with a chip former spaced from its adjacent cutting edge in a direction towards a center of said insert, said chip former being in the shape of an elevated plateau (26) said plateau being confined by portions in each corner area which are non-symmetrical in relation to a bisector (B) passing through each corner, whereby the downwardly extending side walls (27, 28) of said plateau are intended to act as chip breaking walls, **characterized** in that said side wall (27) on one side of the bisector (B) in each corner has a concave configuration whereas the side wall (28) on the other side of said bisector (B) has a convex configuration.

2. A cutting insert as defined in claim 1, **characterized** in, that the radius of curvature (R₂) of said concave side wall (27) being essentially larger than the radius of curvature (R₃) of said convex side wall of said plateau (26).

3. A cutting insert as defined in claim 1 or 2, **characterized** in, that the bisector (B) passes through the inflexion point between said concave and convex side walls (27, 28) of said plateau.

4. A cutting insert as defined in any of the claims 1-3, **characterized** in, that the main cutting edge also includes a minor straight edge portion provided at the intersection between intermediate flat surface portion (25a) and the central flat surface portion (24), said intermediate flat surface portion (25b) being inclined in a direction toward a center of the insert from said central flat surface portion (24).

5. A cutting insert as defined in claim 4, **characterized** in, that the longitudinal extent of said intermediate flat surface portion (25a) being smaller than the longitudinal extent of said central flat surface (24).

6. A cutting insert as defined in any of the claims 1-5, **characterized** in, that the main cutting edge has a total longitudinal extent that amounts to 1.3-1.5 times the extent of said central surface portion (24).

7. A cutting insert as defined in any of the claims 1-6, **characterized** in, that the confining side walls of the plateau (26) are inclined downwards from said plateau to said top face at an acute angle.

8. A cutting insert as defined in any of the claims 1-7, **characterized** in, that said inclining side walls of said plateau comprises two distantly provided, convexly curved portions (30, 31) having smaller radius of curvature (R₄) than the radius of curvature (R₃) of the corner side wall (28), said two distantly provided portions between them confining a straight wall portion (29), which extend along both said central flat surface (24) and along one intermediate flat surface (25b).

9. A cutting insert as defined in any of claims 1-8, **characterized** in, that the shape of the plateau (26) on one side of the insert is inverted as compared with the shape of said plateau on the opposite side of same insert.

## Patentansprüche

1. Schneideinsatz zum Stangenschälen, mit einem polygonalen Hauptteil (10) mit mehreren Ecken, welches aus einem verschleißfesten Material besteht, wobei das Hauptteil obere und untere Flächen (11, 12) sowie eine umlaufende Randfläche (13) aufweist, die sich zwischen jenen erstreckt, wobei die umlaufende Randfläche Eckflächen (22, 23) aufweist, die an den jeweiligen Ecken des Hauptteiles angeordnet sind, wobei die Eckenflächen die obere Fläche in der Weise schneiden, daß sie Hauptschneidkanten (15, 16, 17) bilden, wobei jede dieser Schneidkanten in der Draufsicht auf die Oberfläche konvex gekrümmt ist, die obere Fläche eine Spanfläche definiert, wobei weiterhin die Fläche zwischen zwei Ecken durch einen ebenen Flächenabschnitt (24) mit geraden Schnittkanten entlang der Schnittlinie zwischen diesem Abschnitt (24) und der oberen Fläche sowie entlang der Schnittlinie zwischen diesem Abschnitt (24) und der unteren Fläche (12) getrennt sind, und wobei die Spanfläche mit einem Spanformer versehen ist, der von seiner zugehörigen Schneidkante in Richtung des Zentrums des Einsatzes beabstandet ist, wobei weiterhin der Spanformer die Form eines angehobenen Plateaus (26) hat, wobei das Plateau begrenzt wird durch Abschnitte in jedem Eckbereich, die bezüglich einer durch jede der Ecken verlaufenden Winkelhalbierenden (B) nicht symmetrisch sind, wobei die sich abwärts erstreckenden Seitenwände (27, 28) des Plateaus dafür vorgesehen sind, als Spanbrecherwände zu wirken, **dadurch gekennzeichnet, daß** die Seitenwand (27) auf einer Seite der Winkelhalbierenden (B) in jeder Ecke eine konkave Ausgestaltung hat, während die Seitenwand (28) auf der anderen Seite der Winkelhalbierenden (B) eine konvexe Ausgestaltung hat.

2. Schneideinsatz nach Anspruch 1, **dadurch gekennzeichnet, daß** der Krümmungsradius (R₂) der konkaven Seitenwand (27) wesentlich größer ist als der Krümmungsradius (R₃) der konvexen Seitenwand des Plateaus (26).

3. Schneideinsatz nach Anspruch 1 oder 2, **dadurch gekennzeichnet, daß** die Winkelhalbierende (B) durch den Übergangspunkt zwischen den konkaven und den konvexen Seitenwänden (27, 28) des Plateaus verläuft.

4. Schneideinsatz nach einem der Ansprüche 1 bis 3, **dadurch gekennzeichnet, daß** die Hauptschneidkante ebenfalls einen geraden Nebenschneidkantenabschnitt aufweist, der im Übergang zwischen einem dazwischen liegenden ebenen Flächenabschnitt (25a) und dem zentralen ebenen Oberflächenabschnitt (24) vorgesehen ist, wobei der dazwischen liegende ebene Oberflächenabschnitt (25b) von dem zentralen ebenen Flächenabschnitt (24) aus in Richtung des Zentrums des Einsatzes geneigt ist.

5. Schneideinsatz nach Anspruch 4, **dadurch gekennzeichnet, daß** die Längserstreckung des ebenen Übergangsflächenabschnittes (25a) kleiner ist als die Längserstreckung der zentralen ebenen Fläche (24).

6. Schneideinsatz nach einem der Ansprüche 1 bis 5, **dadurch gekennzeichnet, daß** die Hauptschneidkante eine Gesamtlängenerstreckung hat, die 1,3 bis 1,5 mal der Ausdehnung des zentralen Flächenabschnittes (24) ist.

7. Schneideinsatz nach einem der Ansprüche 1 bis 6, **dadurch gekennzeichnet, daß** die Umgrenzungswände des Plateaus (26) in Richtung der oberen Fläche unter einem spitzen Winkel abwärts geneigt sind.

8. Schneideinsatz nach einem der Ansprüche 1 bis 7, **dadurch gekennzeichnet, daß** die geneigten Seitenwände des Plateaus zwei im Abstand voneinander vorgesehene konvex gekrümmte Abschnitte (30, 31) aufweisen, die einen kleineren Krümmungsradius (R₄) haben als der Krümmungsradius (R₃) der Seitenwand (28) der Ecke, wobei die beiden im Abstand voneinander vorgesehenen Abschnitte dazwischen einen geraden Wandabschnitt (29) begrenzen, der sich sowohl entlang der zentralen ebenen Oberfläche (24) als auch entlang der ebenen Übergangsfläche (25b) erstreckt.

9. Schneideinsatz nach einem der Ansprüche 1 bis 8, **dadurch gekennzeichnet, daß** die Form des Plateaus (26) auf einer Seite des Einsatzes gegenüber der Form des Plateaus auf der entgegengesetzten Seite desselben Einsatzes umgekehrt ist.

## Revendications

1. Plaquette de coupe destinée à un écroûtage de barre comprenant un corps polygonal à plusieurs becs (10) de matériau résistant à l'usure, ledit corps comprenant des surfaces supérieure et inférieure (11, 12) et une surface latérale périphérique (13) s'étendant entre celles-ci, ladite surface latérale périphérique comprenant des faces de becs (22, 23) disposées au niveau des becs respectifs dudit corps, lesdites faces de becs recoupant ladite surface supérieure afin de former des arêtes tranchantes principales (15, 16, 17) chaque dite arête tranchante étant incurvée de façon convexe lorsque ladite surface supérieure est observée en plan, ladite surface supérieure définissant une face de coupe, d'où il résulte que la surface entre deux becs est séparée par une partie de surface plate (24) présentant des arêtes d'intersection droites au niveau de la ligne d'intersection entre ladite partie (24) et la surface supérieure et au niveau de la ligne d'intersection entre ladite partie (24) et la surface inférieure (12), et ladite face de coupe étant munie d'un générateur de copeaux espacé de son arête tranchante adjacente dans une direction vers un centre de ladite plaquette, ledit générateur de copeaux étant sous forme d'un plateau surélevé (26), ledit plateau étant limité par des parties dans chaque région de bec qui sont non symétriques par rapport à une bissectrice (B) passant au travers de chaque bec, d'où il résulte que les parois latérales s'étendant vers le bas (27, 28) dudit plateau sont destinées à agir en tant que parois de fragmentation de copeaux, caractérisée en ce que ladite paroi latérale (27) d'un premier côté de la bissectrice (B) dans chaque bec présente une configuration concave alors que la paroi latérale (28) de l'autre côté de ladite bissectrice (B) présente une configuration convexe.

2. Plaquette de coupe selon la revendication 1, caractérisée en ce que le rayon de courbure (R₂) de ladite paroi latérale concave (27) est sensiblement plus grand que le rayon de courbure (R₃) de ladite paroi latérale convexe dudit plateau (26).

3. Plaquette de coupe selon la revendication 1 ou 2, caractérisée en ce que la bissectrice (B) passe par le point d'inflexion entre lesdites parois latérales concave et convexe (27, 28) dudit plateau.

4. Plaquette de coupe selon l'une quelconque des revendications 1 à 3, caractérisée en ce que l'arête tranchante principale comprend également une partie d'arête droite mineure disposée au niveau de l'intersection entre la partie de surface plate intermédiaire (25a) et la partie de surface plate centrale (24), ladite partie de surface plate intermédiaire (25b) étant inclinée dans une direction vers un centre de la plaquette par rapport à ladite partie de surface plate centrale (24).

5. Plaquette de coupe selon la revendication 4, caractérisée en ce que l'étendue longitudinale de ladite partie de surface plate intermédiaire (25a) est plus petite que l'étendue longitudinale de ladite surface plate centrale (24).

6. Plaquette de coupe selon l'une quelconque des revendications 1 à 5, caractérisée en ce que l'arête tranchante principale présente une étendue longitudinale totale qui s'élève de 1,3 à 1,5 fois l'étendue de ladite partie de surface centrale (24).

7. Plaquette de coupe selon l'une quelconque des revendications 1 à 6, caractérisée en ce que les parois latérales de limite du plateau (26) sont inclinées vers le bas à partir dudit plateau vers ladite face supérieure suivant un angle aigu.

8. Plaquette de coupe selon l'une quelconque des revendications 1 à 7, caractérisée en ce que lesdites parois latérales d'inclinaison dudit plateau comprennent deux parties incurvées de façon convexe, disposées à l'écart (30, 31) présentant un rayon de courbure (R₄) plus petit que le rayon de courbure (R₃) de la paroi latérale de bec (28), lesdites deux parties disposées à l'écart limitant entre elles une partie de paroi droite (29), qui s'étend à la fois le long de ladite surface plate centrale (24) et le long d'une surface plate intermédiaire (25b).

9. Plaquette de coupe selon l'une quelconque des revendications 1 à 8, caractérisée en ce que la forme du plateau (26) d'un premier côté de la plaquette est inversée par comparaison avec la forme dudit plateau du côté opposé de la même plaquette.
